Europäisches Patentamt

European Patent Office

Office européen des brevets

(19)

(11) Veröffentlichungsnummer: **0 080 624**
**B1**

# (12) EUROPÄISCHE PATENTSCHRIFT

(45) Veröffentlichungstag der Patentschrift:
11.09.85

(51) Int. Cl.⁴: **B 65 D 51/00**

(21) Anmeldenummer: **82110392.6**

(22) Anmeldetag: **11.11.82**

(54) Verschlussdeckel, insbesondere für einen Kraftstofftank.

(30) Priorität: 26.11.81 DE 3146824

(43) Veröffentlichungstag der Anmeldung:
08.06.83 Patentblatt 83/23

(45) Bekanntmachung des Hinweises auf die Patenterteilung:
11.09.85 Patentblatt 85/37

(84) Benannte Vertragsstaaten:
AT FR GB IT SE

(56) Entgegenhaltungen:
DE - A - 2 207 210
GB - A - 2 070 577

(73) Patentinhaber: Reutter Metallwarenfabrik GmbH,
Theodor-Heuss-Strasse 12, D-7050 Waiblingen (DE)

(72) Erfinder: Reutter, Heinrich, Theodor-Heuss-Strasse 12,
D-7050 Waiblingen (DE)
Erfinder: Rauleder, Robert, Zacherweg 10,
D-7050 Waiblingen (DE)

(74) Vertreter: Schmid, Berthold et al, Patentanwälte
Dipl.-Ing. B. Schmid Dr. Ing. G. Birn Dipl.-Phys. H.
Quarder Falbenhennenstrasse 17,
D-7000 Stuttgart 1 (DE)

## Beschreibung

Die Erfindung bezieht sich auf einen Verschlußdeckel mit Drehhandhabe und Drehanschlag zum Aufsetzen auf einen mit Gegenanschlag versehenen Einfüllstutzen, insbesondere eines Kraftstofftanks, der in seiner Schließlage unter Zwischenschaltung eines Dichtrings durch Federkraft gegen das freie Stutzende gepreßt ist, wobei der Drehanschlag in der Schließlage eine in das Stutzeninnere weisende Stutzenkante untergreift und der lichte Querschnitt des Einfüllstutzens eine unrunde Form hat, wobei ferner der Dichtring etwa bis zum Anliegen des Drehanschlags am Gegenanschlag axial unbelastet und die axiale Anpressung mittels einer Dreh-Hubvorrichtung erzeugbar ist. Ein derartiger Verschlußdeckel ist durch die GB-A-2 070 577 bekanntgeworden. In dieser Druckschrift wird darauf hingewiesen, daß beim Öffnen und Schließen eines derartigen Verschlußdeckels »eine verhältnismäßig große Kraft aufgewendet werden« muß, »weil dabei der Dichtring auf der Dichtfläche des Tankstutzens schleift«. Das Schließen dieses vorbekannten Verschlußdeckels vermeidet zwar dieses Schleifen des Dichtringes auf der Tankstutzen-Dichtfläche zumindest weitgehend und somit auch die damit verbundene Kraftanstrengung beim Schließen dieses Deckels, jedoch tritt beim Öffnen des Deckels, also dann, wenn er etwa unter maximaler Federkraft steht, die Entlastung des Dichtrings erst nach einer vorangehenden, unter starker Reibung stehenden Drehbewegung ein. Um diese starke Reibung zu mindern, wird deshalb vorgeschlagen, daß die dort erfindungsgemäß eingebaute Distanzhülse »aus gleitfähigem Kunststoff« besteht.

Demnach vermag also dieser Verschlußdeckel die gestellte Aufgabe nicht zu lösen.

Ein weiterer Nachteil des vorbekannten Verschlußdeckels besteht darin, daß die Belastungsfeder bei losem Deckel maximal gespannt ist und in der Schließlage eine geringfügige Entlastung eintritt. Damit besteht die Möglichkeit, daß der Verschlußdeckel bei Überdruck im Tank um das Maß dieser Federentlastung angehoben werden kann. Dies kann zu einem Austritt von Kraftstoff führen.

Die Aufgabe der Erfindung besteht darin, einen Verschlußdeckel der eingangs genannten Art so weiterzubilden, daß nicht nur beim Schließen, sondern auch beim Öffnen ein Schleifen des Dichtrings auf der Dichtfläche des Tankstutzens unterbleibt und außerdem ein federelastisches Abheben des Verschlußdeckels vom freien Stutzende bei unzulässigem Druck im Einfüllstutzen verhindert, zumindest aber wesentlich erschwert wird.

Zur Lösung dieser Aufgabe wird erfindungsgemäß vorgeschlagen, daß der Verschlußdeckel gemäß dem Oberbegriff des Anspruchs 1 entsprechend dem kennzeichnenden Teil dieses Anspruchs ausgebildet ist. Dieser Verschlußdeckel wird in bekannter Weise auf den Tankstutzen aufgesetzt, wobei das Dreh-Sicherungsglied gegenüber dem unrunden lichten Querschnitt des Einfüllstutzens zuvor ausgerichtet wurde. Durch das Betätigen der Drehhandhabe wird der oder werden die Drehanschläge gedreht, bis sie an ihren Gegenanschlägen am Tankstutzen auftreffen. Durch entsprechende Dimensionierung des freien Tankstutzenendes und des Verschlußdeckels erreicht man, daß die Dichtung während dieser Drehbewegung des oder der Drehanschläge auf dem freien Stutzenende lediglich lose aufliegt und damit axial unbelastet bleibt. Damit unterbleibt jedes Schleifen mit dem zugehörigen Kraftaufwand und dem damit verbundenen Verschleiß. Beim Weiterdrehen der Drehhandhabe wird die Dreh-Hubvorrichtung betätigt, was zu einem Spannen der Feder und damit zu einem federnden Anpressen des Dichtrings auf dem freien Stutzenende führt. Die Zustellung des Dichtrings erfolgt dabei rein axial, also wiederum unter Vermeidung einer Verschleiß herbeiführenden reibenden Drehbewegung. Durch entsprechende Ausbildung der Dreh-Hubvorrichtung kann man die Belastungsfeder bis zur Blocklage spannen. In diesem Falle ist auch bei starkem Anstieg des Innendrucks im Einfüllstutzen ein Abheben des Dichtrings vom freien Stutzenende unmöglich. Damit genügt dieser Verschlußdeckel auch höchstens Sicherheitsanforderungen. Die Drehbewegung bis zum Beginn der Relativbewegung der beiden Elemente der Dreh-Hubvorrichtung beträgt vorzugsweise etwa 90". Erst nach dieser Drehung ändert sich der als festes Maß vorgegebene axiale Abstand des Drehanschlags vom Dichtring. Wenn während der ersten 90"-Drehung der Dichtring ohne Pressung lose auf dem freien Stutzenende aufliegt und der Drehanschlag von der zugeordneten, ins Stutzeninnere weisenden Stutzenkante keinen nennenswerten Abstand hat, so entspricht das Maß der Zusammenpressung des Dichtrings dem von der Dreh-Vorrichtung durchgeführten Hub während einer weitergehenden Drehbewegung der Drehhandhabe. Das außen überstehende Ende des Verschlußdeckels wird infolgedessen gegen den Einfüllstutzen hingezogen. Diese axiale Zustellbewegung resultiert also aus einer die 90°-Drehung übersteigenden weiteren Drehbewegung der Drehhandhabe, wobei vorzugsweise das Prinzip der schiefen Ebene Anwendung findet.

Das Drehsicherungsglied kann gegebenenfalls die Teile festhalten, welche an der Drehbewegung von Anfang an nicht teilnehmen sollen. Das Aufgleitstück, welches zugleich einen Dreh-Mitnehmer für den Drehanschlag bildet, übt während der ersten Phase der Drehbewegung beim Schließen des Verschlußdeckels zunächst lediglich seine Funktion als Drehmitnehmer aus. Erst wenn der Drehanschlag am Gegenanschlag aufgetroffen ist, wirkt es als reines Aufgleitstück, d. h. es gleitet entlang einer Gegenfläche oder kante, wobei nach dem genannten Prinzip der schiefen Ebene über dieses Aufgleiten der eine Teil am anderen die axiale Anpreßbewegung für den Dichtring erzeugt.

Eine besonders bevorzugte Ausführungsform der Erfindung sieht vor, daß das eine Element der Dreh-Hubvorrichtung ein am Drehanschlag in Längsrichtung des Stutzens verschieb- aber undrehbar gelagertes, federbelastetes Preßglied ist, das mindestens eine sich in Umfangsrichtung erstreckende Keilfläche od. dgl. aufweist, die mit einer bzw. je einer Aufgleitfläche oder -kante des anderen als Aufgleitstück ausgebildeten Elements zusammenwirkt oder umgekehrt, wobei je ein Drehanschlag des Preßglieds die Drehbewegung des Aufgleitstücks in beiden Drehrichtungen begrenzt. Der Begriff »Keilfläche« ist in weitestem Sinne zu verstehen, d. h. die Fläche muß nicht notwendigerweise stetig verlaufen, und ihre Neigung kann bei stetigem Verlauf über die Länge der Aufgleitstrecke durchaus unterschiedlich sein. Somit sind auch Selbsthemmung und stufenartiges Aufgleiten mit eingeschlossen. Wichtig ist lediglich, daß die Drehbewegung in eine Hubbewegung umgesetzt werden kann. Im übrigen kann man über den Umfang gesehen mehr als eine derartige aufgleitende Dreh-Hubvorrichtung gleicher Art vorsehen.

Eine Weiterbildung der Erfindung ergibt sich aus dem kennzeichnenden Teil des Anspruchs 3. Bei der Lagerung des Preßglieds im Innern des Drehanschlags handelt es sich selbstverständlich um eine Schiebelagerung. Beide sind ja in Drehrichtung miteinander gekuppelt, so daß insoweit eine Relativbewegung ausgeschlossen ist.

Eine weitere Ausgestaltung der Erfindung ist im Kennzeichen des Anspruchs 4 beschrieben. Aufgrund des unrunden Querschnitts des Preßglieds und demnach natürlich auch der Aufnahme im Drehanschlag für das Preßglied erreicht man die erwähnte Mitnahme in Drehrichtung und axiale Verschieblichkeit.

Eine weitere Variante der Erfindung ist im Anspruch 5 gekennzeichnet. Sofern anstelle eines oder beispielsweise zweier radial abstehender Ansätze ein umlaufender Rand Verwendung findet, so befindet sich an diesem zumindest ein Nocken bzw. eine Keilfläche. Eine zweckmäßige Weiterbildung sieht vor, daß sich, in Aufgleitrichtung gesehen, an wenigstens eine Keilfläche ein Anschlag für das Aufgleitstück anschließt. »Aufgleitrichtung« entspricht dabei jeweils der Drehrichtung beim Schließen des Deckels. Demzufolge beendet der erwähnte Anschlag die weitergehende Drehbewegung derjenigen Teile des Verschlußdeckels, die sich nach dem Auftreffen des Drehanschlags am Gegenanschlag noch um einen vorgegebenen Winkel weiterdrehen können.

Eine andere wichtige Ausführungsform der Erfindung besteht darin, daß dem bzw. jedem Anschlag eine Rastvertiefung unmittelbar vorgelagert ist und das Aufgleitstück an seiner Aufgleitfläche eine bzw. je eine damit zusammenwirkende Raste aufweist, oder als Raste ausgebildet ist. Jede Raste bewirkt zusammen mit ihrer Rastvertiefung eine Verdrehsicherung des vollständig aufgedrehten und dicht sitzenden Verschlußdeckels. Außerdem signalisiert sie dem Benutzer das Erreichen der Drehendstellung. Um jedoch den Dichtring so wenig wie möglich zu entlasten, ist die Rastvertiefung nicht besonders stark ausgeprägt.

Eine weitere Ausbildung der Erfindung besteht darin, daß eine in Aufgleitrichtung hintere Kante jedes Anschlags bzw. des Aufgleitstücks mit einem Rückdrehanschlag des Preßglieds zusammenwirkt. Nach dem Lösen der Dreh-Hubvorrichtung werden sämtliche drehbaren Teile des Verschlußdeckels gemeinsam in die Ausgangsstellung zurückgedreht, in welcher der Verschlußdeckel aus der unrunden Einfüllstutzenöffnung herausgezogen werden kann. Diesen Rückdrehanschlag kann man so placieren, daß beim nachfolgenden Wiederaufsetzen des Verschlußdeckels die Drehmitnahme bis zum Auftreffen des Drehanschlags am Gegenanschlag ohne, zumindest aber ohne wesentliche Totgangstrecke, erfolgt.

Des weiteren ist es von besonderem Vorteil, daß zwischen das Preßglied und die Topfbodeninnenfläche des Drehanschlags eine Druckfeder, vorzugsweise Schraubendruckfeder, geschaltet ist, welche die Rückstellung aller Teile der Dreh-Hubvorrichtung nach Wegfall der daran angreifenden Kraft bewirkt. Außerdem bildet diese Druckfeder ein Übertragungsglied für die Anpreßkraft, mit welcher der nach innen ragende Stutzenrand gewissermaßen zwischen die zugeordnete Stirnkante des Drehanschlags und den Dichtring eingepreßt wird.

Eine andere Ausgestaltung der Erfindung geht aus Anspruch 10 hervor. Die Verschlußdeckelaußenklappe mit dem angeformten Drehknebel od. dgl. kann hinsichtlich ihrer Form gleich oder ähnlich sein wie bei den vorbekannten Verschlußdeckeln. Dort kennt man außer einem sikkenartigen Drehknebel mittlerweise auch die Sternform oder ähnliche, das Drehen erleichternde Formgestaltungen.

Eine zweckmäßige Weiterbildung der Erfindung ist im Anspruch 11 beschrieben. Falls auf einen Schließzylinder verzichtet wird, kann man die beiden Teilstücke des stutzenförmigen Ansatzes auch in anderer Weise als über einen Schließzylinder und Riegel miteinander kuppeln. Damit eignet sich dieser Verschlußdeckel als verschließbare und unverschließbare Ausführung.

Zwischen den Drehanschlag und den radialen Außenbund des unteren Ansatzteils ist bei einer zweckmäßigen Ausführungsform das ringförmig ausgebildete Dreh-Sicherungsglied eingesetzt. Bei dieser Ausführungsform dient das Dreh-Sicherungsglied als eine Art Lagerring für die restlichen Teile des Verschlußdeckels während der ersten Drehphase bis zum Auftreffen des Drehanschlags am Gegenanschlag, der jedoch seinerseits formschlüssig und damit drehfest im Stutzen gehalten ist. Eine weitere, sehr wichtige Aufgabe dieses Drehanschlags besteht darin, daß der einen Distanzring bildet, der den Dichtring und den Drehanschlag in solchem gegenseitigem Axialabstand hält, daß während der ersten Phase der Drehbewegung die Dichtung in ungepreßtem Zustand über das freie Stutzenende gleiten kann.

Eine weitere Variante der Erfindung besteht darin, daß der radiale Außenbund des unteren Ansatzteils mit dem freien Rand des oberen Ansatzteils bzw. der Dreh-Handhabe rastend verbunden ist. Sowohl die Herstellung dieser Teile als auch ihr Zusammenbau werden hierdurch preisgünstig möglich. Außerdem entsteht auf diese Weise auch noch eine Drehführung.

Eine andere Ausgestaltung der Erfindung sieht vor, daß der Schließzylinder unter Zwischenschaltung einer Verstärkungshülse rastend mit dem freien Ende des rohrförmigen oberen Ansatzteils verbunden ist. Die Verstärkungshülse kann beispielsweise aus glasfaserverstärktem Kunststoff bestehen, der sich durch eine hohe Festigkeit auszeichnet. Andererseits kann man aber für die gesamte übrige Dreh-Handhabe einen einfacheren und damit preiswerteren Werkstoff verwenden, so daß trotz der zweiteiligen Ausführung noch eine Einsparung erzielt wird. Am inneren Ende des Schließzylinders befindet sich eine umlaufende Nut, in welche federnde, widerhakenartige, einen Kranz bildende Verrastglieder einrasten. Die Verstärkungshülse ist durch Formschluß im rohrförmigen oberen Ansatzteil gegen Drehen gesichert. Man verwendet entweder eine unrunde Außenkontur oder aber radial abstehende Halteleisten od. dgl.

Eine andere bevorzugte Ausführungsform der Erfindung ist durch Anspruch 15 gekennzeichnet. Die Außenkontur des Dreh-Sicherungsglieds ist unrund und sie entspricht vorzugsweise dem lichten Querschnitt des Einfüllstutzens am Einfüllende. Wie bereits erläutert, bildet auch hierbei das Dreh-Sicherungsglied ein Distanzelement, welches die Stützfläche des Drehanschlags im richtigen Abstand zum Dichtring und damit auch zu der ins Stutzeninnere weisende Stutzenkante des vorzugsweise genormten Stutzens hält.

Beim Übergang vom Außenbund in den ringförmigen Teil des Dreh-Sicherungsglieds kann eine Nut eingestochen sein, in welche der innere Rand des Dichtrings eingreift und diesen somit weitgehend unverlierbar festhält.

Eine Weiterbildung der Erfindung geht aus dem Kennzeichen des Anspruchs 16 hervor. Die treppenartige Ausnehmung gestattet ein rastendes Relativverdrehen des zugeordneten Aufgleitstücks. In der »niedersten« Raste bilden die genannten Teile lediglich eine Mitnehmereinrichtung für den Drehanschlag. Sobald dieser am Gegenanschlag des Einfüllstutzens aufgetroffen ist, findet eine Relativbewegung jedes Aufgleitstücks gegenüber seiner stirnseitigen Kante statt. Jetzt erst beginnt die Pressung des Dichtrings. Andererseits bleibt aber der Dichtring während der gesamten Drehung relativ zum Einfüllstutzen ortsfest, so daß er keinerlei Verschleiß unterworfen ist. Er wird beim Spannen der Dreh-Hubvorrichtung lediglich axial gegen den Einfüllstutzen gedrückt. Die Pressung des Dichtrings nimmt so lange zu, bis das Aufgleitstück am Drehanschlag angekommen ist. Im Grunde genommen wirken die einzelnen Treppenstufen bereits wie Drehanschläge, jedoch kann jedes Aufgleitstück um jeweils eine Treppenstufe weiter rasten, wenn das Drehmoment zu hoch wird. Die Stufensprünge entfallen selbstverständlich, wenn man anstelle der treppenartig geformten Kante eine stetig ansteigende verwendet, jedoch wird der treppenartig geformten deshalb der Vorzug gegeben, weil sie auf jeden Fall sicherstellt, daß die Pressung des Dichtrings erst dann beginnt, wenn der Drehanschlag am Gegenanschlag angelangt ist. Genormte Einfüllstutzen, insbesondere von Kraftstofftanks bei Kraftfahrzeugen, haben, in Aufdrehrichtung gesehen, vor dem Gegenanschlag eine Aufgleitkante. Die Abmessungen des vorstehend beschriebenen Verschlußdeckels sind jedoch so gewählt, daß der Drehanschlag diese Aufgleitkante gar nicht berührt, sondern ein Formschluß erst beim Auftreffen des Drehanschlags am Stutzen-Gegenanschlag zustande kommt. Somit läßt sich dieser Verschlußdeckel ohne jeglichen Kraftaufwand aufsetzen und so weit drehen, bis der Drehanschlag bereits die richtige Drehendstellung eingenommen hat. Erst daraufhin erfolgt ein vergleichsweise kleiner Kraftaufwand, mit dem die Pressung des Dichtrings vorgenommen wird. Deshalb gewährleistet dieser Verschlußdeckel nicht nur eine einfache Montage, sondern auch eine hohe Dichtheit und ein verkantungsfreies Aufsetzen.

Eine weitere Variante der Erfindung kennzeichnet sich dadurch, daß zur Bildung der Dreh-Hubvorrichtung der Drehanschlag mindestens eine Aufgleitfläche aufweist, die mit einem bzw. je einem drehfest mit der Dreh-Handhabe verbundenen nockenartigen Dreh-Mitnehmer bei federnder axialer Anpressung zusammenwirkt oder umgekehrt. Letzteres ist so zu verstehen, daß sich die Aufgleitfläche auch am Dreh-Mitnehmer befinden kann. Dieser Verschlußdeckel zeichnet sich durch eine besonders einfache und kompakte Bauform aus. Dies gilt insbesondere dann, wenn der Drehanschlag in zweckmäßiger Weise einstückig mit einer als wellenförmiger Ringfeder ausgebildeten, axial wirkenden Druckfeder gefertigt ist, wobei wenigstens eine der Wellen zugleich eine Aufgleitfläche bildet und als eine Mitnehmerraste wirkt. Hinsichtlich der Dreh-Mitnahme wird die gesamte Mitnehmerraste ausgenutzt, während bezüglich des Aufgleitens lediglich die in Aufgleitrichtung vordere Wellenhälfte benötigt wird. Die Wellen müssen nicht notwendigerweise in Umfangsrichtung gleich groß und von gleicher Form sein, jedoch ist es vorteilhaft, wenn die Wellenhöhe ringsum gleich ist, um eine gute Abstützung über den gesamten Umfang zu gewährleisten.

Als weitere Ausgestaltung der Erfindung wird vorgeschlagen, daß der Drehanschlag durch zwei um 180° versetzte, radial abstehende Lappen der Ringfeder gebildet ist und sich je eine Aufgleitfläche im Bereich jedes Lappens befindet. In der Schließstellung des Deckels, also bei zusammengepreßtem Dichtring, liegt im Bereich jedes Lappens ein Dreh-Mitnehmer, der eine Verkürzung des Hebelarms und damit eine Biegeversteifung bewirkt, welche den notwendigen Preßdruck für den Dichtring sichert oder zumindest unterstützt. Eine andere Ausbildung der Erfindung ergibt sich aus dem kennzeichnenden Teil des Anspruchs 20.

Eine besonders vorteilhafte Ausgestaltung aller Ausführungsformen besteht darin, daß die Dreh-Handhabe wenigstens ein Anzeigefenster od. dgl. aufweist und ein dahinter bzw. darunter gelegenes, relativ dazu begrenzt drehbares Verschlußdeckelteil mindestens ein Anzeigesymbol trägt, das sich bei ganz geschlossenem, dicht an den Stutzen angepreßtem Verschlußdeckel im Bereich des Anzeigefensters befindet. Bei dem Symbol kann es sich beispielsweise um das Wort »ZU« handeln. In bevorzugter Weise sind jedoch zwei um 180° versetzte Anzeigefenster od. dgl. vorgesehen, um das gute »Ablesen« auch dann zu gewährleisten, wenn der Verschlußdeckel in einer um eine halbe Umdrehung versetzten Lage auf den Stutzen aufgesetzt worden ist. Man weiß aufgrund dieser Ausgestaltung stets zweifelsfrei, wann sich der Verschlußdeckel in der völlig geschlossenen Stellung befindet, in der eine maximale Dichtheit gewährleistet ist. Sollte das bzw. keines der Symbole sichtbar sein, so befinden sich die relativ zueinander verdrehbaren Teile in einer Zwischenstellung, in welcher der Verschlußdeckel weder abgenommen werden kann, noch den Einfüllstutzen dicht verschließt. Demnach kann es bei diesen Verschlußdeckeln im Gegensatz zu den vorbekannten des Standes der Technik nicht vorkommen, daß man den Stutzen irrigerweise für vollständig abgedichtet hält und dann, im Falle eines Kraftfahrzeugs, unterwegs Kraftstoff über den ungenügend verschlossenen Stutzen verliert. Die Symbole bringt man zweckmäßigerweise an dem erwähnten radialen Außenbund bzw. der Druckplatte an, an deren gegenüberliegender Seite sich der Dichtring abstützt. Im anderen Falle sollten die Symbole relativ zu dieser Druckplatte bzw. dem radialen Außenbund undrehbar sein.

In der Zeichnung sind verschiedene Ausführungsbeispiele der Erfindung dargestellt. Es zeigt

Fig. 1 einen Halbschnitt durch eine erste Ausführungsform,

Fig. 2 einen Halbschnitt durch eine zweite Variante,

Fig. 3 einen vollständigen Schnitt durch den Verschlußdeckel der Fig. 2, jedoch in einer um 90° gedrehten Stellung,

Fig. 4 ein Detail aus F i g. 3 in der Vorderansicht in der Montagestellung,

Fig. 5 eine vergleichbare Darstellung, jedoch in der Dicht-Stellung,

Fig. 6 eine Ansicht der Fig. 2 in Pfeilrichtung A bei abgenommener Abdeckung des freien Drehanschlagendes,

Fig. 7 wiederum einen Halbschnitt eines dritten Ausführungsbeispiels,

Fig. 8 und 9 zwei Details aus Fig. 7, und zwar einmal in der Montage- und das andere Mal in der Dichtstellung,

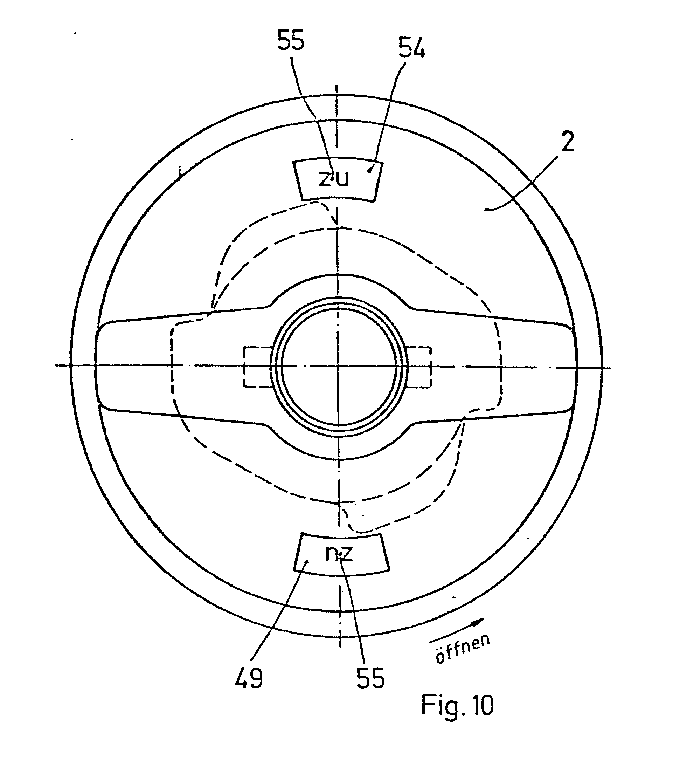

Fig. 10 eine Draufsicht auf den Verschlußdeckel.

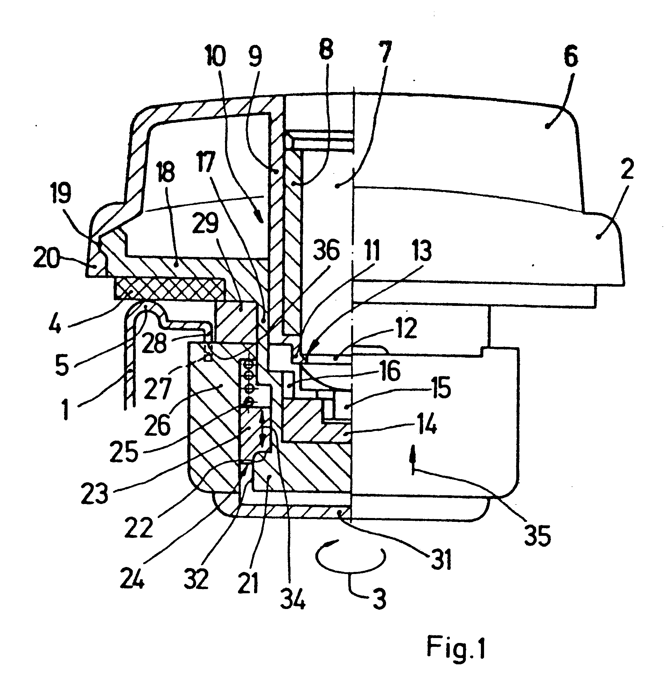

Auf den Einfüllstutzen 1, insbesondere eines Kraftstofftanks eines Kraftfahrzeugs od. dgl., ist der Einfüllstutzen aufgesetzt und durch Drehen seiner Dreh-Handhabe 2, beispielsweise im Sinne des Pfeils 3, in seine Schließlage gebracht worden, in welcher der Dichtring 4 fest auf das freie Stutzenende 5 aufgepreßt wird, wodurch der Stutzen dicht verschlossen ist. Die Dreh-Handhabe 2 kann von bekannter Form sein und einen mittigen, in der Art einer Sicke gestalteten Drehknebel 6 aufweisen. Fig. 1 zeigt eine abschließbare Version mit einem zentrisch eingebauten Schließzylinder 7. Er ist drehfest in einer Verstärkungshülse 8 gehalten, die ihrerseits drehfest im oberen Ansatzteil 9 eines stutzenförmigen Ansatzes 10 der Handhabe 2 sitzt. An seinem inneren Ende trägt das obere Ansatzteil 9 einen Kranz von Verrastnasen 11, die unter Bildung einer Schnappverbindung 13 in eine Außennut 12 am inneren Ende des Schließzylinders 7 eingerastet sind. Ein sich in axialer Richtung erstreckender, exzentrisch angeordneter Zapfen 15 des inneren Schließzylinderendes greift in eine entsprechend ausgebildete Nut eines in radialer Richtung verschiebbaren Riegels 14 ein. Dieser wirkt mit einem Drehanschlag 16 des unteren Ansatzteils 17 des stutzenförmigen Ansatzes 10 zusammen. In der gezeichneten, radial nach außen verschobenen Lage des Riegels 14 ist somit das untere Ansatzteil 17 drehfest mit dem oberen Ansatzteil 9 gekuppelt. Der Schließzylinder befindet sich dabei in der »OFFEN«-Stellung. Befindet sich der Schließzylinder hingegen in seiner Schließstellung, so wird der Riegel 14 vom Zapfen 15 des Schließzylinders 10 vom Drehanschlag 16 zurückgezogen, weswegen das untere Ansatzteil 17 vom oberen 9 abgekuppelt ist. Dreht man in dieser Schließlage die Handhabe 2, so nehmen das untere Ansatzteil 17 und die drehfest damit verbundenen Teile an dieser Drehbewegung nicht teil, und deshalb verbleibt der Verschlußdeckel in seiner geschlossenen Lage.

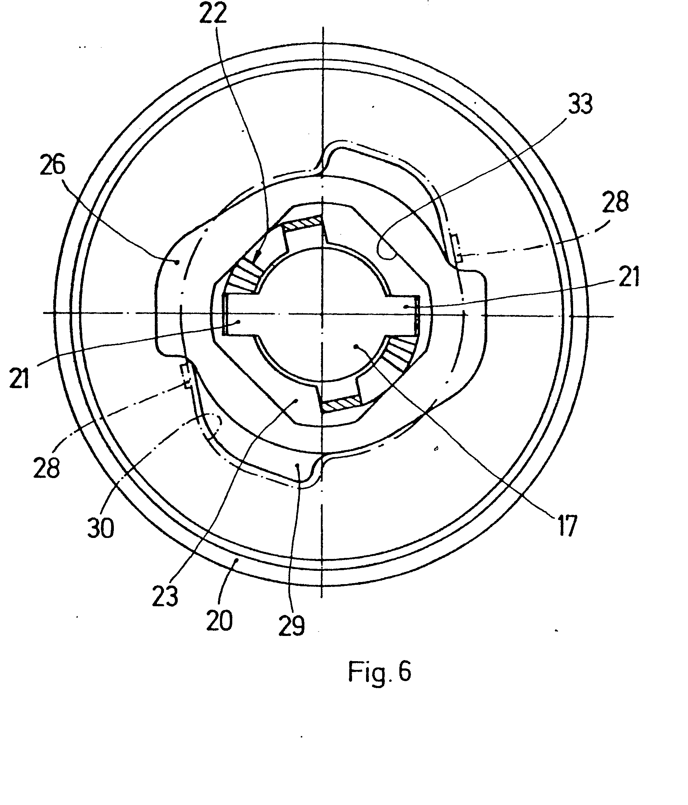

An seinem oberen Ende trägt das untere Ansatzteil 17 einen radialen Außenbund 18, der eine Druckplatte für den Dichtring 4 bildet. Eine rastende oder schnappende Verbindung 19 mit dem freien Rand 20 der Dreh-Handhabe 2 gewährleistet einerseits eine Versteifung beim Pressen des Dichtrings 4 und andererseits eine Außenlagerung beim Leer-Durchdrehen der Handhabe 2 in der Schließstellung des Schließzylinders 7. In das untere Ende des Ansatzteils 17 ist die erwähnte Radialführung für den Riegel 14 eingearbeitet. Außerdem sind dort zwei radial abstehende Aufgleitstücke 21 angeformt. Sie arbeiten mit einer Keilfläche 22 od. dgl. eines ringförmigen Preßglieds 23 zusammen, wobei beide eine Dreh-Hubvorrichtung 24 bilden. Das Preßglied 23 stützt sich über eine vorzugsweise als Schraubendruckfeder ausgebildete Druckfeder 25 an einem Innenbund eines Drehanschlags 26 ab. Dieser arbeitet mit einem Gegenanschlag 27 des Einfüllstutzens 1 zusammen. Bei diesem Gegenanschlag handelt es sich um zwei nach innen ragende, um 180° versetzte Lappen 28 des genormten Einfüllstutzens 1. Zwischen den Drehanschlag 26 und den radialen Außenbund 18 des unteren Ansatzteils 17 ist ein Dreh-Sicherungsglied 29 geschaltet. Es hat eine Ringform mit zentrischer Bohrung, jedoch ist sein Außenumfang dem unrunden, sich aus Fig. 6 ergebenden lichten Querschnitt 30 im Bereich der Lappen 28 angeglichen, so daß ein Formschluß entsteht. Eine mittels Ultraschall angeschweißte oder angeklebte Abdeckkappe 31 schließt die innere Öffnung des Drehanschlags 26 dicht ab.

Die Keilfläche 26 kann stetig oder gemäß der Darstellung in Fig. 6 treppenförmig oder treppenartig verlaufen. Aus dieser Figur sieht man auch, daß die Querschnittsformen des Drehanschlags 26 und des Dreh-Sicherungsglieds 29 gleich sind. Beim Aufsetzen des Verschlußdeckels auf den Einfüllstutzen 1 liegen beide deckungsgleich. Dabei ist das Schloß geöffnet. Dreht man nunmehr mit Hilfe der Handhabe 2, des Riegels 14 des unteren Ansatzteils 17 sowie des Preßglieds 23 den Drehanschlag 26 relativ zum Dreh-Sicherungsglied 29, so wird schließlich die aus Fig. 6 ersichtliche Stellung der Teile 26 und 29 erreicht, wobei die beiden radial abstehenden, nockenartigen Ansätze des Drehanschlags 26 am Gegenanschlag 27, d. h. der jeweils zugekehrten Stirnkante des betreffenden Lappens 28, anschlagen. Die Mitnahme des Preßglieds 23 erfolgt über die Dreh-Hubvorrichtung 24, welche zugleich auch eine Dreh-Mitnahmevorrichtung ist, weil die Aufgleitstücke 21 auch Dreh-Mitnehmer 32 bilden. Die Mitnahme ist möglich aufgrund der Keilflächen 22. Außen ist das Preßglied 23 unrund und Bohrung 33 hat denselben Querschnitt (Fig. 6), so daß sich ein Formschluß ergibt. Bevorzugterweise handelt es sich um einen Vierkant-Querschnitt mit abgerundeten Ecken. In dieser Bohrung 33 ist das Preßglied 23 im Sinne des Doppelpfeils 34 sowie in einer Richtung gegen den Widerstand der Druckfeder 25 verschiebbar.

Wenn der Drehanschlag 26 am Gegenanschlag 27 aufgetroffen ist und das Drehmoment an der Dreh-Handhabe 5 noch andauert, d. h. die Bedienungsperson die Dreh-Handhabe in gleicher Drehrichtung weiterdreht, so erfolgt eine Relativdrehung des Aufgleitstücks 21 gegenüber seiner zugeordneten Keilfläche 22, und das führt zu einem Verschieben des Preßglieds 23 im Sinne des Pfeils 35 gegen den Widerstand der Druckfeder 25. Weil jedoch der Drehanschlag 26 eine ins Stutzeninnere weisende Stutzenkante 36 untergreift und somit in Pfeilrichtung 35 nicht ausweichen kann, muß sich zwangsläufig das untere Ansatzteil 17 mit all den damit verschiebefest gekuppelten Teilen entgegen dem Pfeil 35 ins Stutzeninnere bewegen. Dies führt zu einem Anpressen des Dichtrings 4 an das freie Stutzenende 5. Eine Selbsthemmung verhindert ein unerwünschtes Rückstellen. Bringt man nunmehr den Schließzylinder 7 in die Schließstellung, so kann man weder die Dichtungspressung aufheben noch das untere Ansatzteil 17 und die drehfest damit verbundenen Teile zurückdrehen. Ein nicht gezeigter Drehanschlag beendet die Relativdrehung des Aufgleitstücks 21 gegenüber der Kreisfläche 22 des Preßglieds 23. Dasselbe erreicht man auch durch Blocklage der Druckfeder 25.

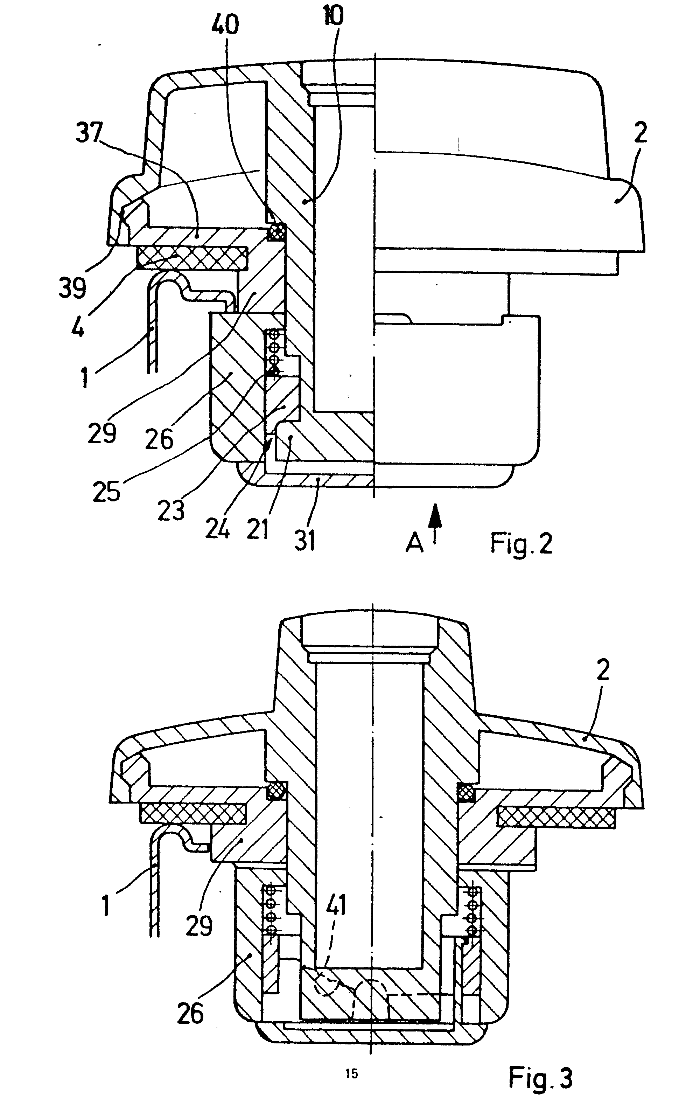

Die Ausführungsform gemäß Fig. 2 und 3 ist derjenigen nach Fig. 1 in vielem ähnlich, weswegen nachfolgend lediglich die unterschiedliche Ausbildung beschrieben wird.

Der stutzenförmige Ansatz 10 der Dreh-Handhabe 2 ist nicht mehr zweigeteilt, sondern einstückig. Dafür trägt dort das Dreh-Sicherungsglied 29 einen radial abstehenden Außenbund 37, der über eine schnappende Verbindung 38 mit dem Außenrand der Handhabe 2 in gleicher Weise verbunden ist wie die entsprechenden Teile der schnappenden Rastverbindung 19. Zwischen das Dreh-Sicherungsglied 29 und einen Absatz des stutzenförmigen Ansatzes 10 ist ein Radialdichtring, insbesondere O-Ring 40, geschaltet, der in eine Hohlkehle des Sicherungsglieds 29 eingreift.

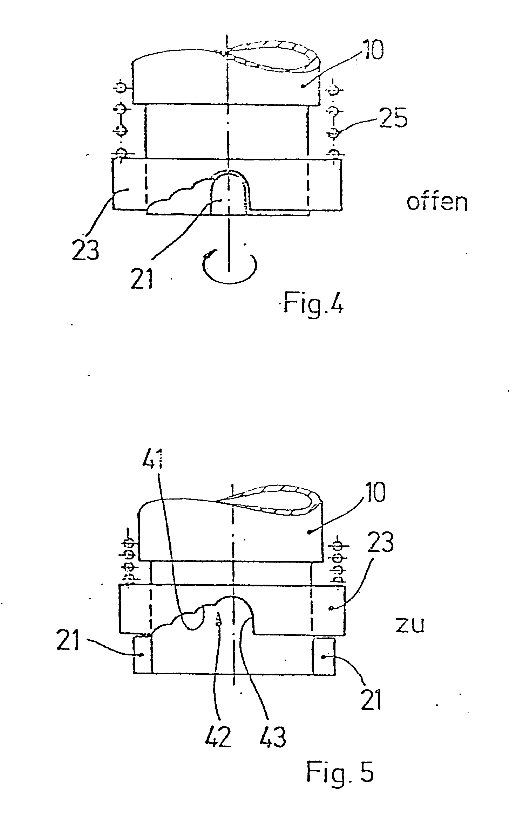

Die Keilfläche 22 des Preßglieds 23 kann, wie bereits ausgeführt, stetig oder unstetig verlaufen, beispielsweise als treppenartig geformte, stirnseitige Kante 41 (Fig. 4 und 5) ausgebildet sein, wobei es sich dort um eine Ausnehmung 42 am unteren Rand des Preßglieds 23 handelt. Beim inneren Ende dieser Ausnehmung entsteht auf diese Weise einer der Drehanschläge, genauer gesagt, der Drehanschlag 43 für das Aufgleitstück 21, und zwar handelt es sich dabei um den Anschlag für das Zurückdrehen aus der völlig geschlossenen Stellung des Verschlußdeckels.

Wenn man diesen Verschlußdeckel auf den Einfüllstutzen 1 aufsetzt, so verhindert das Dreh-Sicherungsglied 29 in Verbindung mit dem erwähnten Formschluß mit dem lichten Querschnitt 30 gemäß Fig. 6 ein Drehen des Dichtrings 4 auch während der ersten Phase der Drehbewegung bis zum Auftreffen des Drehanschlags 26 am Gegenanschlag 27 des Einfüllstutzens 1. Dies gilt erst recht für das nachfolgende Spannen des Dichtrings über die Dreh-Hubvorrichtung 24.

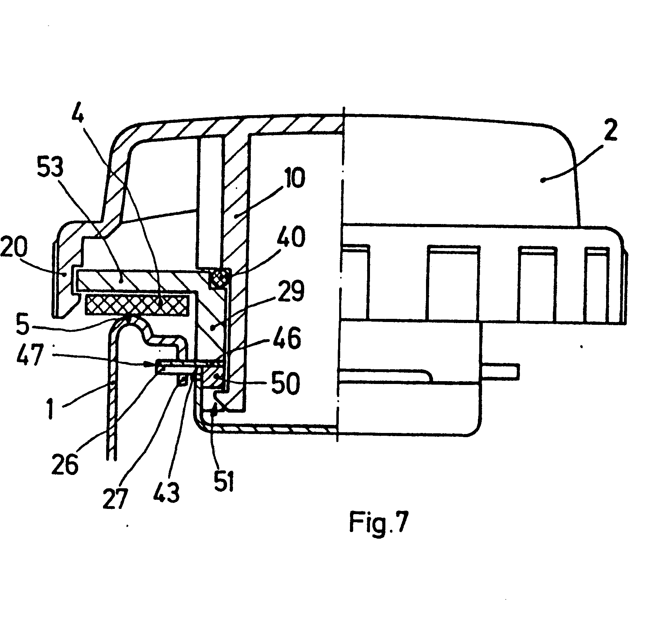

Beim Ausführungsbeispiel der Fig. 7 bis 9 weist der Drehanschlag zwei um 180° versetzte Aufgleitflächen 44 auf, die mit je einem mit der Dreh-Handhabe 2 verbundenen, nockenartigen Dreh-Mitnehmer 45 bei federnder axialer Anpressung eine Dreh-Hubvorrichtung 56 bilden.

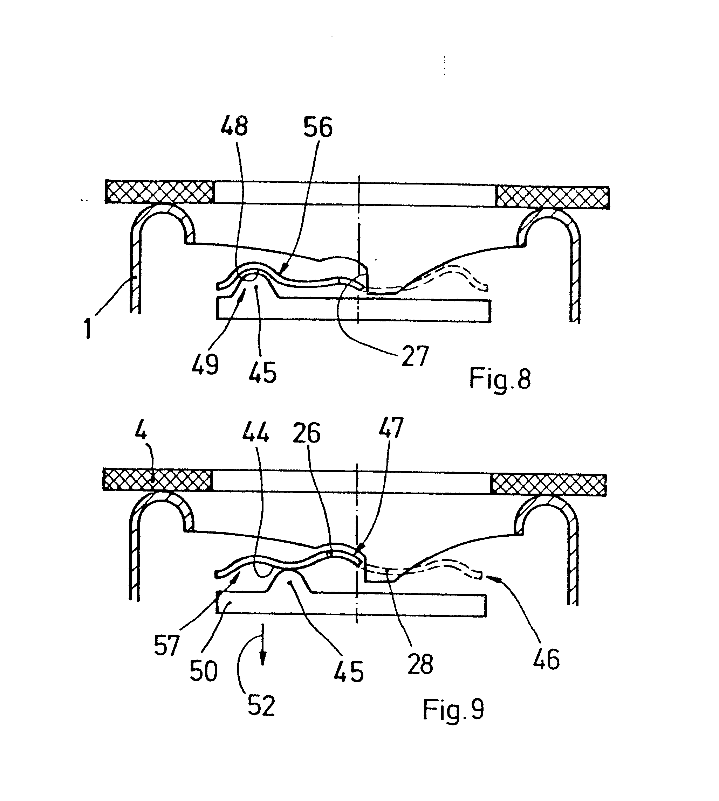

Dabei ist der Drehanschlag 26 einstückig mit einer als wellenförmige Ringfeder 46 ausgebildeten, axial wirkenden Druckfeder gefertigt bzw. als solche ausgebildet, wobei wenigstens eine der Wellen zugleich eine Aufgleitfläche 44 bildet und als Mitnehmerraste 57 wirkt. Bei zwei Dreh-Mitnehmern sind natürlich zwei derartige Mitnehmerrasten und Aufgleitflächen vorhanden. Als Drehanschlag wirken demnach eigentlich lediglich die beiden um 180° versetzten, radial abstehenden Lappen 47 der Ringfeder 46. Weil sich die Mitnehmerrasten 57 für den nockenartigen Dreh-Mitnehmer 45 im Bereich jeweils eines Lappens 47 befinden, erfolgt in der Schließstellung dieses Ausführungsbeispiels eine starke Versteifung des Gegenanschlags 27 aufgrund der Verkürzung seiner wirksamen Federlänge. In den Fig. 8 und 9 sind die Verhältnisse beim geöffneten und geschlossenen Verschlußdeckel etwas übertrieben dargestellt. Die Wellen der Wellenfeder sind, über den Umfang gesehen, vorzugsweise gleich hoch jedoch ist im Bereich jedes Lappens 47 eine etwas engere Welle vorgesehen, die ein gutes Verrasten mit dem Dreh-Mitnehmer 45 bei geschlossenem Schließdeckel gewährleistet.

Wenn der Dreh-Mitnehmer 45 in der Ausgangsstellung des losen Verschlußdeckels in die Welle 48 der wellenförmigen Ringfeder 46 eingreift, so entsteht auf diese Weise eine Dreh-Mitnahmevorrichtung 49. Weil sich die Dreh-Mitnehmer 45 an einem Ringstück 50 befinden, das über eine Rastverbindung 51 mit dem stutzenförmigen Ansatz 10 der Dreh-Handhabe 2 gekuppelt und in den Fig. 8 und 9 etwas vereinfacht dargestellt ist, bewirkt ein Drehen der Handhabe 2 nicht nur eine Mitnahme des Ringstücks 50, sondern auch der wellenförmigen Ringfeder 46, bis der Drehanschlag 26 am Gegenanschlag 27 des Einfüllstutzens 1 auftrifft. Ein Weiterdrehen in gleicher Drehrichtung führt zu einem Überfahren der Aufgleitfläche 44 durch den Dreh-Mitnehmer 45. Dabei führt das Ringstück 50 eine Abwärtsbewegung im Sinne des Pfeils 52 durch. Das Ringstück 50 nimmt über die Rastverbindung 51 die Dreh-Handhabe 2 in gleichem Sinn mit und aufgrund der formschlüssigen Verbindung des Außenbunds 53 des Dreh-Sicherungsglieds 29 mit dem Rand 20 der Handhabe 2 wird der Dichtring 4 gegen das freie Stutzende 5 gepreßt. Die Drehbewegung des Ringstücks 50 muß durch einen geeigneten, nicht gezeigten Drehanschlag, gestoppt werden.

Die Dreh-Handhabe 2 besitzt gemäß F i g. 10 wenigstens ein, vorzugsweise aber zwei um 180° versetzte Anzeigefenster 54 od. dgl., durch welche hindurch zumindest bei vollständig geschlossenem Verschlußdeckel ein Anzeigesymbol 55, beispielsweise das Wort »ZU«, zu sehen ist. Auf diese Art und Weise ist gewährleistet, daß man mit dem Drehen in Schließrichtung erst dann aufhört, wenn der Verschlußdeckel auch tatsächlich die Drehendlage erreicht hat. Weil beim Öffnen das das Anzeigesymbol 55 tragende Teil (z. B. 18, 37, 53) sich nach dem Entspannen der Dichtung zusammen mit der Dreh-Handhabe noch weiter zurückdrehen läßt, ist an sich nicht vorgesehen, ein zweites, in Drehrichtung versetztes Anzeigesymbol vorzusehen, weil dieses bereits nach der ersten Teildrehung sichtbar wäre und während des zweiten Teils der Rückdrehbewegung immer sichtbar bleibt. Es könnte dadurch zu einer Mißdeutung dieser Anzeige kommen.

Weil dieser Verschlußdeckel besonders dicht schließt, wird in einer weiteren Ausgestaltung der Erfindung vorgeschlagen, daß er zumindest mit einem Überdruck-Ventil versehen ist. Wenn also der Druck im Einfüllstutzen über den Ansprechdruck dieses Überdruck-Ventils ansteigt, so öffnet letzteres und sorgt dadurch für einen Druckabbau. Zusätzlich kann man auch noch ein Unterdruck-Ventil einbauen, welches einen gegebenenfalls beim Entleeren des Tanks in dessen Innerem entstehenden Unterdruck abbaut.

**Patentansprüche**

1. Verschlußdeckel mit Drehhandhabe und Drehanschlag (26) zum Aufsetzen auf einen mit Gegenanschlag (27) versehenen Einfüllstutzen (1), insbesondere eines Kraftstofftanks, der in seiner Schließlage unter Zwischenschaltung eines Dichtrings (4) durch Federkraft gegen das freie Stutzenende (5) gepreßt ist, wobei der Drehanschlag (26) in der Schließlage eine ins Stutzeninnere weisende Stutzenkante (36) untergreift und der lichte Querschnitt (30) des Einfüllstutzens eine unrunde Form hat, wobei ferner der Dichtring etwa bis zum Anliegen des Drehanschlags (26) am Gegenanschlag (27) axial unbelastet und die axiale Anpressung mittels einer Dreh-Hubvorrichtung (24, 43, 56) erzeugbar ist, dadurch gekennzeichnet, daß die Drehhandhabe (2) ein Aufgleitstück (21) trägt, welches zugleich einen Dreh-Mitnehmer (32, 45) für den Drehanschlag (26) bildet, wobei der Dreh-Mitnehmer und der Drehanschlag über die Dreh-Hubvorrichtung (24, 43, 56) gekuppelt sind, und daß ein drehbar an der Drehhandhabe gelagertes Drehsicherungsglied (29) drehfest im Einfüllstutzen (1) gehalten ist, wobei ein Element (23, 46) der Dreh-Hubvorrichtung (24, 43, 56) mit dem Drehanschlag drehfest aber beim Schließen axial gegen die Federkraft verschiebbar und das andere (21, 50) mit der Drehhandhabe (2) drehfest verbunden sind.

2. Verschlußdeckel nach Anspruch 1, dadurch gekennzeichnet, daß das eine Element der Dreh-Hubvorrichtung (24, 43, 56) ein am Drehanschlag (26) in Längsrichtung des Stutzens (1) verschiebbar undrehbar gelagertes, federbelastetes (25) Preßglied (23) ist, das mindestens eine sich in Umfangsrichtung erstreckende Keilfläche (22) od. dgl. aufweist, die mit einer bzw. je einer Aufgleitfläche od. -kante des anderen, als das Aufgleitstück (21) ausgebildeten Elements zusammenwirkt oder umgekehrt, wobei je ein Drehanschlag (26) des Preßglieds (23) die Drehbewegung des Aufgleitstücks (21) in beiden Drehrichtungen begrenzt.

3. Verschlußdeckel nach Anspruch 2, dadurch gekennzeichnet, daß der Drehanschlag (26) die Gestalt eines topfförmigen Hohlkörpers aufweist, dessen Topfrand ins Stutzeninnere weist und dessen Topfbodenaußenfläche die ins Stutzeninnere weisende Stutzenkante (36) untergreift, wobei seitlich um 180° versetzte, insbesondere angeformte Ansätze der Topfaußenwandung Anschlagelemente bilden, und daß die Dreh-Handhabe (2) den Topfboden mit einem stutzenförmigen Ansatz (10) zentrisch durchsetzt und das Preßglied (23) im Innern des Drehanschlags (26) gelagert ist.

4. Verschlußdeckel nach Anspruch 3, dadurch gekennzeichnet, daß das Preßglied (23) eine unrunde, insbesondere etwa als Vierkant mit abgerundeten Ecken ausgebildete Außenkontur sowie eine im wesentlichen ringförmige Gestalt aufweist und der stutzenförmige Ansatz (10) der Dreh-Handhabe (2) das Preßglied (23) in Achsrichtung durchsetzt, wobei sich am inneren Ansatzende das Aufgleitstück (21) befindet.

5. Verschlußdeckel nach Anspruch 4, dadurch gekennzeichnet, daß das Aufgleitstück (21) als radial abstehender Rand oder Ansatz ausgebildet ist, insbesondere aus zwei um 180° versetzten Ansätzen besteht, die mit je einer Keilfläche (22) am ins Stutzeninnere weisenden Ende des Preßglieds (23) zusammen die Dreh-Hubvorrichtung (24) bilden.

6. Verschlußdeckel nach Anspruch 5, dadurch gekennzeichnet, daß sich, in Aufgleitrichtung gesehen, an wenigstens eine Keilfläche ein Anschlag für das Aufgleitstück (21) anschließt.

7. Verschlußdeckel nach Anspruch 6, dadurch gekennzeichnet, daß dem bzw. jedem Anschlag eine Rastvertiefung unmittelbar vorgelagert ist und das Aufgleitstück (21) an seiner Aufgleitfläche eine bzw. je eine damit zusammenwirkende Raste aufweist oder als Raste ausgebildet ist.

8. Verschlußdeckel nach Anspruch 6 oder 7, dadurch gekennzeichnet, daß eine in Aufgleitrichtung hintere Kante jedes Anschlags bzw. des Aufgleitstücks (21) mit einem Rückdrehanschlag des Preßglieds (23) zusammenwirkt.

9. Verschlußdeckel nach einem der Ansprüche 3 bis 8, dadurch gekennzeichnet, daß zwischen das Preßglied (23) und die Topfbodeninnenfläche des Drehanschlags (26) eine Druckfeder (25), vorzugsweise Schraubendruckfeder, geschaltet ist.

10. Verschlußdeckel nach einem der Ansprüche 3 bis 9, dadurch gekennzeichnet, daß die Dreh-Handhabe (2) als Verschlußdeckelaußenkappe, insbesondere mit angeformtem Drehknebel (6) od. dgl., ausgebildet ist, der mit dem stutzenförmigen Ansatz (10) drehfest kuppelbar oder verbunden, insbesondere einstückig gefertigt ist.

11. Verschlußdeckel nach Anspruch 10, dadurch gekennzeichnet, daß der stutzenförmige Ansatz (10) zweiteilig ausgebildet ist und der obere Ansatzteil (9) einen Schließzylinder (7) aufnimmt, während im unteren (17) ein radial verschiebbarer Riegel (14) gelagert ist, der in der Schließstellung mit wenigstens einem Drehanschlag (16) des unteren Ansatzteils (17) gekuppelt ist, und daß sich an einem radialen Außenbund (18) des unteren Ansatzteils (17) eine Aufnahme oder zumindest Anlagefläche für den Dichtring (4) befindet und das Preßglied (23) sowie der Drehanschlag (26) in Axialrichtung verschiebbar daran gelagert sind.

12. Verschlußdeckel nach Anspruch 11, dadurch gekennzeichnet, daß zwischen den Drehanschlag (26) und den radialen Außenbund (18) des unteren Ansatzteils (17) das ringförmig ausgebildete Dreh-Sicherungsglied (29) eingesetzt ist.

13. Verschlußdeckel nach Anspruch 11 oder 12, dadurch gekennzeichnet, daß der radiale Außenbund (18) des unteren Ansatzteils (17) mit dem freien Rand des oberen Ansatzteils (9) bzw. der Dreh-Handhabe (2) rastend verbunden ist.

14. Verschlußdeckel nach einem der Ansprüche 11 bis 13, dadurch gekennzeichnet, daß der Schließzylinder (7) unter Zwischenschaltung einer Verstärkungshülse (8) rastend mit dem freien Ende des rohrförmigen oberen Ansatzteils (9) verbunden ist.

15. Verschlußdeckel nach Anspruch 10, dadurch gekennzeichnet, daß das Dreh-Sicherungsglied (29) eine im wesentlichen ringförmige Gestalt aufweist und ein daran insbesondere angeformter, radial abstehender Außenbund (37) drehbar, insbesondere rastend (39) mit der Dreh-Handhabe (2) verbunden ist, sowie ein Abstützglied für den Dichtring (4) bildet, wobei die Dreh-Handhabe (2) drehbar und abgedichtet (40) im Dreh-Sicherungsglied (29) gelagert ist.

16. Verschlußdeckel nach Anspruch 15, dadurch gekennzeichnet, daß der stutzenförmige Ansatz (10) der Dreh-Handhabe (2) insbesondere an seinem freien Ende zwei um 180° versetzte, radial abstehende Drehmitnehmer (21) trägt, die zugleich Aufgleitstücke bilden und mit je einer treppenartig geformten, stirnseitigen Kante (41), vorzugsweise einer Ausnehmung des Preßglieds (23), zusammenwirken, wobei sich am inneren Ende der Ausnehmung einer der Drehanschläge (43) für das Aufgleitstück (2) befindet.

17. Verschlußdeckel nach Anspruch 1, dadurch gekennzeichnet, daß zur Bildung der Dreh-Hubvorrichtung (43) der Drehanschlag (26) mindestens eine Aufgleitfläche (44) aufweist, die mit einem bzw. je einem drehfest mit der Dreh-Handhabe (2) verbundenen, nockenartigen Drehmitnehmer (45) bei federnder axialer Anpressung zusammenwirkt oder umgekehrt.

18. Verschlußdeckel nach Anspruch 17, dadurch gekennzeichnet, daß der Drehanschlag (26) einstückig mit einer als wellenförmige Ringfeder (46) ausgebildeten, axial wirkenden Druckfeder gefertigt ist, wobei wenigstens je eine der Wellen zugleich eine Aufgleitfläche (44) bildet und als eine Mitnahmeraste (48) wirkt.

19. Verschlußdeckel nach Anspruch 18, dadurch gekennzeichnet, daß der Drehanschlag (26) durch zwei um 180" versetzte, radial abstehende Lappen (47) der Ringfeder (46) gebildet ist und sich je eine Aufgleitfläche (44) im Bereich jedes Lappens befindet.

20. Verschlußdeckel nach Anspruch 18 oder 19, dadurch gekennzeichnet, daß sich die Dreh-Mitnehmer (45) an einem insbesondere rastend angekuppelten Ringstück (15) eines stutzenförmigen Ansatzes (10) der Dreh-Handhabe (2) befinden und sich die Ringfeder (46) einerseits an diesem Ringstück und andererseits an einer drehbar und abgedichtet am stutzenförmigen Ansatz gelegenen, das Dreh-Sicherungsglied (29) bildenden Hülse abstützt, deren radial nach außen abstehender Rand (53) eine Druckplatte für den Dichtring (4) bildet.

21. Verschlußdeckel nach einem der vorhergehenden Ansprüche, dadurch gekennzeichnet, daß die Dreh-Handhabe (2) wenigstens ein Anzeigefenster (49) od. dgl. aufweist und ein dahinter bzw. darunter gelegenes, relativ dazu begrenzt drehbares Verschlußdeckelteil (18, 37, 53) mindestens ein Anzeigesymbol (45) trägt, das sich bei ganz geschlossenem, dicht an den Stutzen (1) angepreßtem Verschlußdeckel im Bereich des Anzeigefensters befindet.

22. Verschlußdeckel nach einem der vorhergehenden Ansprüche, gekennzeichnet durch mindestens ein bei Überdruck und/oder wenigstens ein bei Unterdruck im Einfüllstutzen (1) öffnenden Überdruck- bzw. Unterdruck-Ventil.

**Claims**

1. Closure cap with rotary grip and stop (26) for fitment on a filler pipe (1) in particular of a fuel tank and provided with an abutment (27) and which, in its closed position, is pressed via an interposed gasket (4) against the free pipe end (5) by spring force, the stop (26), in the closed position, engaging under an edge (36) directed into the interior of the filler pipe, the inside cross-section (30) of the filler pipe having a non-circular shape, the gasket furthermore remaining axially unloaded until the stop (26) is bearing substantially on the abutment (27), the axial pressure which is applied being generated by a twist-lift device (24, 43, 56), characterized in that the twist grip (2) carries a slide-on member (21) which at the same time constitutes means (32, 45) for entraining the stop (26), the entraining means and the stop being coupled by the twist-lift device (24, 43, 56) and in that non-rotatable in the filler pipe (1) is a rotary lock (29) mounted to be rotatable on the twist grip, an element (23, 46) of the twist-lift device (24, 43, 56) being rotationally rigidly connected to the stop but, upon closure, being displaceable axially against spring force while the other (21, 50) is non-rotatably connected to the twist grip (2).

2. Closure cap according to claim 1, characterized in that one element of the twist-lift device (24, 43, 56) is a spring loaded (25) pressing member (23) mounted to be non-rotatable but displaceable on the stop (26) in the longitudinal direction of the filler pipe (1), the pressing member (23) having, extending in the peripheral direction, at least one wedge-shaped face (22) or the like which co-operates with a or with each slide-on face or edge of the other element constructed as the slide-on member (21) or vice versa, one stop (26) of the pressing member (23) limiting the rotary movement of the slide-on member (21) in both directions of rotation.

3. Closure cap according to claim 2, characterized in that the stop (26) is shaped like a hollow pot, the rim of which is directed towards the interior of the pipe, the outer face of the pot bottom engaging beneath the edge (36) which is directed towards the interior of the pipe, integral projections on the outer wall of the pot, staggered laterally by 180°, constitute abutment elements, the twist-grip (2) having a nozzle-like projection (20) passing through the centre of the pot bottom, the pressing member (23) being mounted inside the stop (26).

4. Closure cap according to claim 3, characterized in that the pressing member (23) has a non-circular outer contour constructed in particular and substantially as a rectangle with rounded corners, and having a substantially annular form the nozzle-like projection (10) of the twist-grip (2) traversing the pressing member (23) in an axial direction, the slide-on member (21) being disposed at the inner end of the projection.

5. Closure cap according to claim 4, characterized in that the slide-on member (21) is constructed as a radially projecting rim or projection, consisting in particular of, staggered by 180° in respect of each other, two projections which, together with in each case one wedge-shaped face (22) on the end of the pressing member (23) which is directed towards the interior of the filler pipe, forming the twist-lift device (24).

6. Closure cap according to claim 5, characterized in that viewed in the slide-on direction, there is an abutment for the slide-on member (21) adjacent to at least one wedge-shaped face.

7. Closure cap according to claim 6, characterized in that a ratchet depression is mounted directly in front of the or each abutment, the slide-on member (21) being constructed as a ratchet or having on its slide-on face a ratchet or a ratchet which co-operates therewith.

8. Closure cap according to claim 6 or 7, characterized in that an edge of each abutment or of the slide-on member (21) which is at the rear in the slide-on direction co-operates with a non-return stop which prevents rotation of the pressing member (23).

9. Closure cap according to one of claims 3 to 8, characterized in that between the pressing member (23) and the inside face of the pot bottom of the stop (26) there is a thrust spring (25), preferably a coil thrust spring.

10. Closure cap according to one of claims 3 to 9, characterized in that the twist grip (2) is constructed as an outer cap over the closure cap and in particular has an integral rotary lever (6) or the like which is connected or in particular made in one piece with or is adapted to be coupled non-rotatably to the nozzle-like projection (10).

11. Closure cap according to claim 10, characterized in that the nozzle-like projection (10) is made in two parts, the upper part (9) housing a locking cylinder (7) while there is mounted in the lower part (17) a radially displaceable bolt (14) which, in the position of closure, is coupled to at least one stop (16) on the lower part (17) of the projection and in that there is disposed on a radial outer shoulder (18) of the lower part (17) of the projection a housing or at least a bearing surface for the gasket (4), the pressing member (23) and the stop (26) being mounted thereon to be displaceable in an axial direction.

12. Closure cap according to claim 11, characterized in that the annularly constructed rotary lock (29) is inserted between the stop (26) and the radial outer shoulder (18) of the lower part (17) of the projection.

13. Closure cap according to claim 11 or 12, characterized in that the radial outer shoulder (18) of the lower part (17) of the projection is connected by a ratchet-type action to the free edge of the upper part (9) of the projection or to the twist grip (2).

14. Closure cap according to one of claims 11 to 13, characterized in that the closure cylinder (7), through an interposed reinforcing sleeve (8), is connected in ratchet fashion to the free end of the tubular upper projection part (9).

15. Closure cap according to claim 10, characterized in that the member (29) for preventing rotation is of substantially annular form and in that a radially projecting outer collar (37) which is in particular integral therewith is connected in particular in ratchet fashion (39) to the twist-grip (2), forming a bracing means for the gasket (4), the twist-grip (2) being rotatably mounted in sealing-tight fashion (40) in the rotary locking member (29).

16. Closure cap according to claim 15, characterized in that the nozzle-like projection (10) of the twist-grip (2) has in particular at its free end and offset by 180°, two radially projecting drive members (21) which at the same time constitute slide-on members co-operating with in each case a step-like end edge (41), preferably of a recess in the pressing member (23), one of the rotary stops (43) for the slide-on member (2) being disposed at the inner end of the aperture.

17. Closure cap according to claim 1, characterized in that to form the twist-lift device (23) the stop (26) has at least one slide-on face (44) which, under the application of resilient axial pressure, co-operates with a knob-like rotary entraining means (45) connected to the twist-grip (2).

18. Closure cap according to claim 17, characterized in that the stop (16) is in one piece with an axially acting thrust spring constructed as an undulating annular spring (46), at least one of the undulations constituting at the same time a slide-on face (44) and acting as an entraining catch (48).

19. Closure cap according to claim 18, characterized in that the stop (26) is formed by, staggered by 180° in respect of each other, two radially projecting lugs (47) of the annular spring (46), each slide-on face (44) being disposed in the region of each lug.

20. Closure cap according to claim 18 or 19, characterized in that the rotary entraining means (45) are disposed on an in particular ratchet-wise coupled annular piece (15) of a nozzle-like projection (10) of the rotary twist-grip (2), the annular spring (46) being braced on the one hand on this annular member and on the other on a sleeve forming the rotary locking member (29) and fitted in sealing-tight fashion on the nozzle-like projection and of which the radially out-wardly projecting rim (53) constitutes a thrust plate for the gasket (4).

21. Closure cap according to one of the preceding claims, characterized in that the twist-grip (2) has at least one display window (49) or the like and in that situated behind or under it and adapted for limited rotation relative to it a closure lid part (18, 37, 53) carries at least one display symbol (45) which is in the region of the display window when the closure cap is completely closed and pressed tightly on the filler pipe (1).

22. Closure cap according to one of the preceding claims, characterized by at least one over pressure or under pressure valve opening in the event of over pressure and/or at least one over pressure or under pressure valve opening when there is a negative pressure in the filler pipe (1).

## Revendications

1. Couvercle de fermeture avec poignée tournante et butée tournante (26) destiné à être placé sur une tubulure de remplissage (1), notamment d'un réservoir de carburant, muni d'une contre-butée (27), qui est appliqué dans sa position de fermeture contre l'extrémité libre (5) de la tubulure par l'action d'un ressort avec intercalage d'un joint d'étanchéité (4), la butée tournante (26) étant engagée dans la position de fermeture sous un bord (36) orienté vers l'intérieur de la tubulure et la section intérieure (30) de la tubulure de remplissage, étant de forme non-ronde, le joint d'étanchéité étant en outre détendu axialement jusqu'à ce que la butée tournante (26) vienne en contact avec la contre-butée (27) et la pression axiale étant réalisée au moyen d'un dispositif tournant et de levage (24, 43, 56), caractérisé en ce que la poignée tournante (2) comporte une pièce coulissante (21) formant simultanément un organe d'entraînement en rotation (32, 45) pour la butée tournante (26), l'organe d'entraînement en rotation et la butée tournante étant accouplés par l'intermédiaire du dispositif tournant et de levage (24, 43, 56), et qu'un organe de sécurité tournant (29) logé mobile en rotation sur la poignée tournante est maintenu fixe en rotation dans la tubulure de remplissage (1), un élément (23, 46) du dispositif tournant et de levage (24, 43, 56) étant solidaire en rotation de la butée tournante mais déplaçable contre l'action du ressort pendant la fermeture et l'autre (21, 50) étant monté solidaire en rotation de la poignée tournante (2).

2. Couvercle de fermeture selon la revendication 1, caractérisé que l'un des éléments du dispositif tournant et de levage (24, 43, 56) est un organe de pression (23) à ressort (25) logé déplaçable dans le sens longitudinal de la tubulure (1) mais immobile en rotation sur la butée tournante (26), cet organe comportant au moins une surface cunéiforme (22) ou analogue s'étendant dans le sens périphérique coopérant avec une surface ou un bord coulissant de l'autre élément formé de la pièce coulissante (21) ou inversement, une butée tournante (26) de l'organe de pression (23) limitant le mouvement de rotation de la pièce coulissante (21) dans les deux sens de rotation.

3. Couvercle de fermeture selon la revendication 2, caractérisé en ce que la butée tournante (26) a la configuration d'un corps creux en forme d'un pot dont le bord est orienté vers l'intérieur de la tubulure et dont la surface extérieure du fond vient s'engager sous le bord (36) orienté vers l'intérieur de la tubulure, des épaulements moulés de la paroi extérieure du pot décalé latéralement de 180° formant des éléments de butée, et que la poignée tournante (2) traverse au centre le fond du pont avec un appendice (10) en forme de tube, et que l'organe de pression (23) est logé à l'intérieur de la butée tournante (26).

4. Couvercle de fermeture selon la revendication 3, caractérisé en ce que l'organe de pression (23) a une configuration extérieure non-ronde, notamment carrée avec des angles arrondis et une forme essentiellement annulaire et que l'appendice (10) de forme tubulaire de la poignée tournante (2) traverse dans le sens axial l'organe de pression (23), la pièce coulissante (21) se trouvant à l'extrémité intérieure de l'appendice.

5. Couvercle de fermeture selon la revendication 4, caractérisé en ce que la pièce coulissante (21) a la forme d'un bord ou un épaulement radialement en saillie, et est notamment constituée de deux épaulements décalés de 180° formant avec une surface cunéiforme (22) le dispositif tournant et de levage (24) se trouvant à l'extrémité de l'organe de pression (23) orienté vers l'intérieur du tube.

6. Couvercle de fermeture selon la revendication 5, caractérisé en ce qu'une butée pour la pièce coulissante (21) fait suite à au moins une surface cunéiforme, vu dans le sens du coulissement.

7. Couvercle de fermeture selon la revendication 6, caractérisé en ce qu'un évidement d'encliquetage est disposé immédiatement devant chaque butée et que la pièce coulissante (21) comporte sur sa surface coulissante un cran coopérant avec celui-ci ou est réalisée sous forme d'un cran.

8. Couvercle de fermeture selon la revendication 6 ou 7, caractérisé en ce qu'un bord arrière dans le sens du coulissement de chaque butée ou de la pièce coulissante (21) coopère avec une butée de rotation arrière de l'organe de pression (23).

9. Couvercle de fermeture selon l'une des revendications 3 à 8, caractérisé en ce qu'un organe de compression (25), de préférence un ressort hélicoïdal, est intercalé entre l'organe de pression (23) et la surface intérieure du fond de la butée tournante (26).

10. Couvercle de fermeture selon l'une des revendications 3 à 9, caractérisé en ce que la poignée tournante (2) est constituée par une calotte extérieure de couvercle, notamment avec un renflement moulé (6) ou analogue susceptible d'être accouplé ou relié fermement en rotation, en particulier réalisé d'une seule pièce, avec l'appendice (10) en forme de tube.

11. Couvercle de fermeture selon la revendication 10, caractérisé en ce que l'appendice (10) en forme de tube est constitué en deux parties, la partie supérieure (9) recevant un cylindre de fermeture (7), tandis qu'un verrou (14) mobile dans le sens radial, qui est accouplé dans la position de fermeture avec au moins une butée tournante (16) de la partie inférieure (17) de l'épaulement, est logé dans cette dernière (17), et qu'un logement ou du moins une surface d'appui pour le joint d'étanchéité (4) se trouve sur un collet radial extérieur (18) de la partie inférieure (17) de l'appendice, l'organe de pression (23) et la butée tournante (26) étant logés mobiles dans le sens axial contre cette surface.

12. Couvercle de fermeture selon la revendication 11, caractérisé en ce que l'organe de sécurité tournant (29) de forme annulaire est intercalé entre la butée tournante (26) et le collet radial extérieur (18) de la partie inférieure (17) de l'appendice.

13. Couvercle de fermeture selon la revendication 11 ou 12, caractérisé en ce que le collet radial extérieur (18) de la partie inférieure (17) de l'appendice est relié par encliquetage au bord libre de la partie supérieure (9) de l'appendice et/ou de la poignée tournante (2).

14. Couvercle de fermeture selon l'une des revendications 11 à 13, caractérisé en ce que le cylindre de fermeture (7) est relié par encliquetage à l'extrémité libre de la partie tubulaire supérieure (9) de l'appendice, un manchon de renforcement (8) étant intercalé entre les éléments.

15. Couvercle de fermeture selon la revendication 10, caractérisé en ce que l'organe de sécurité tournant (29) a une configuration essentiellement anulaire et comporte un collet extérieur (37), notamment moulé, radialement en saillie, qui est solidaire en rotation, notamment par encliquetage (39) avec la poignée tournante (2), et forme un organe d'appui pour le joint d'étanchéité (4), la poignée tournante (2) étant logée mobile en rotation et de manière étanche (40) dans l'organe de sécurité tournant (29).

16. Couvercle de fermeture selon la revendication 15, caractérisé en ce que l'appendice tubulaire (10) de la poignée tournante (2) comporte notamment à son extrémité libre deux tenons d'entraînement en rotation (21) radialement en saillie et décalés de 180° formant en même temps des pièces coulissantes et coopérant chacun avec un bord frontal (41) en forme d'escalier, de préférence un évidement de l'organe de pression (23), l'une des butées tournantes (43) pour la pièce coulissante (21) se trouvant à l'extrémité intérieure de l'évidement.

17. Couvercle de fermeture selon la revendication 1, caractérisé en ce que, pour constituer le dispositif tournant et de levage (43), la butée tournante (26) comporte au moins une surface coulissante (44) coopérant sous une pression axiale élastique avec un entraîneur en rotation (45) en forme de came solidaire en rotation de la poignée tournante (2).

18. Couvercle de fermeture selon la revendication 17, caractérisé en ce que la butée tournante (26) est réalisée d'une seule pièce avec un ressort de compression constitué par un ressort annulaire (46) ondulé dans le sens axial, l'une des ondulations au moins formant simultanément une surface coulissante (44) et agissant comme cran d'entraînement (48).

19. Couvercle de fermeture selon la revendication 18, caractérisé en ce que la butée tournante (26) est formée de deux languettes (47) du ressort annulaire (46) radialement en saillie et décalées de 180° et qu'une surface coulissante (44) se trouve au niveau de chaque languette.

20. Couvercle de fermeture selon les revendications 18 ou 19, caractérisé en ce que les tenons d'entraînement en rotation (45) se trouvent sur une pièce annulaire (15) d'un appendice tubulaire (10) de la poignée tournante (2), qui est notamment accouplée par encliquetage, et que le ressort annulaire (46) prend appui d'une part sur cette pièce annulaire et d'autre part sur une douille mobile en rotation et montée de manière étanche sur l'épaulement tubulaire et formant l'organe de sécurité tournant (29), dont le bord (53) radialement en saillie vers l'extérieur forme une plaque de pression pour le joint d'étanchéité (4).

21. Couvercle de fermeture selon l'une des revendications précédentes, caractérisé en ce que la poignée tournante (2) comporte au moins une fenêtre d'affichage (49) ou analogue et qu'une partie (18, 37, 53) du couvercle de fermeture disposée derrière ou au-dessous de celle-ci et dont le mouvement relatif en rotation est limité par rapport à cette dernière, porte au moins un symbole d'affichage (45) qui se trouve au niveau de la fenêtre lorsque le couvercle est entièrement fermé et appliqué de manière étanche sur la tubulure (1).

22. Couvercle de fermeture selon l'une des revendications précédentes, caractérisé par une soupape de surpression et/ou de dépression ouvrant en cas de surpression et/ou de dépression dans la tubulure de remplissage (1).

Fig.1

Fig. 2

Fig. 3

offen

Fig. 4

zu

Fig. 5

Fig. 6

Fig. 7

Fig.8

Fig.9

Fig. 10